# EUROPÄISCHE PATENTSCHRIFT

(11) **EP 4 542 325 B1**
(45) Veröffentlichungstag und Bekanntmachung des Hinweises auf die Patenterteilung: **04.03.2026**
(21) Anmeldenummer: 24198718.9
(22) Anmeldetag: 05.09.2024
(51) Int. Cl.: G05D 1/224, G05D 105/20, G05D 107/13, G05D 109/10

(54) **SIMULATIONSBASIERTER LATENZAUSGLEICH FÜR TELEOPERIERTE FAHRZEUGE**
SIMULATION-BASED LATENCY COMPENSATION FOR TELEOPERATED VEHICLES
COMPENSATION DE LATENCE BASÉE SUR UNE SIMULATION POUR VÉHICULES TÉLÉOPERÉS

(30) Priorität: 19.10.2023 DE 102023210281
(43) Veröffentlichungstag der Anmeldung: 23.04.2025
(73) Patentinhaber: Stellantis Auto SAS, 78300 Poissy (FR); FCA US LLC, Auburn Hills, MI 48326-2766 (US)
(72) Erfinder: THIEM, Christoph, 65428 Rüsselsheim am Main (DE); EBERLE, Ulrich, 65428 Rüsselsheim am Main (DE); FRANK, Sebastian, 65428 Rüsselsheim am Main (DE)
(74) Vertreter: ESIP

(56) Entgegenhaltungen:
- US-A1- 2011 066 262
- HOSSEINI AMIN ET AL: "Predictive safety based on track-before-detect for teleoperated driving through communication time delay", 2016 IEEE INTELLIGENT VEHICLES SYMPOSIUM (IV), IEEE, 19 June 2016 (2016-06-19), pages 165 - 172, XP032938959, DOI: 10.1109/IVS.2016.7535381

## Beschreibung

Die Erfindung betrifft ein System zur Durchführung einer teleoperierten Fahrzeugführung eines automatisierten Fahrzeugs.

Typische konventionelle Kraftfahrzeuge wie Personenkraftwagen sind darauf ausgelegt, dass deren Fahrzeugführung durch eine im Fahrzeug befindliche Person stattfindet. Mit zunehmendem Automatisierungsgrad ändert sich die Rolle dieser Person von einem Fahrzeugführer zur aktiven Fahrzeugführung zunehmend hin zur alleinigen Aufgabe der Überwachung der vom Fahrzeug selbstständig ausgeführten Fahrmanöver und Steuereingriffe. An der Spitze dieser Entwicklung stehen vollständig automatisierte Fahrzeuge, welche autonom nicht nur einzelne Manöver, sondern das Abfahren einer vollständigen geplanten Route durchführen können. Während ein menschlicher Fahrzeugführer in einem nicht-automatisierten Fahrzeug das alleinige Entscheidungsorgan des Fahrzeugs ist, übernimmt er auch zumindest in Teilen die Rolle von Aktoren, wenn durch seine Bewegungen Stellgrößen mechanisch (höchstens mit direkter Unterstützung) vorgegeben werden. Mit zunehmendem Automatisierungsgrad von Fahrzeugen sind jedoch Aktoren vorzusehen, beispielsweise elektrische oder hydraulische Aktoren, welche alle durch Steuerelektronik angesteuert werden, sodass ein Rechner des Fahrzeugs entsprechende Kommandos an die Aktoren übermitteln kann, welche diese dann mechanisch umsetzen. Dieser Umstand erlaubt es, eine Schnittstelle an einer digitalen Steuereinheit oder direkt an den Aktoren des Fahrzeugs zur Fahrzeugführung aus einer externen Zentrale anzusteuern. So ist die Möglichkeit einer Teleoperation des automatisierten Fahrzeugs eröffnet, bei der ein menschlicher Fahrzeugführer des Fahrzeugs eben nicht im Fahrzeug selbst Platz nehmen muss, sondern außerhalb des Fahrzeugs an einem stationären Arbeitsplatz sitzen kann, und Kommandos an diese Schnittstelle des Fahrzeugs vorgeben kann, welche per Datenübertragung, insbesondere drahtlos, an das Fahrzeug zur Ausführung übermittelt werden. Zudem können relevante Fahrzeuginformationen (zum Beispiel ein Videostrom mit Bildern aus einer Egoperspektive, beispielsweise vom Fahrersitz des Fahrzeugs aufgenommen) an den entfernt steuernden Fahrzeugführer übermittelt werden. Findet die Teleoperation in einer Umgebung mit weiteren Verkehrsteilnehmern statt, kann der menschliche Fahrzeugführer durch Erfassung der lokalen Umgebung des Fahrzeuges und darin befindlicher weiterer Verkehrsteilnehmer nötige Fahrzeugbewegungen (durch laterale/longitudinale Steuerung) zur Vermeidung von Verkehrsbehinderungen und Gefahrensituationen zur Erreichung eines Zielortes einleiten.

Die DE 10 2021 123 234 A1 betrifft in diesem Zusammenhang einen teleoperierenden Fahrzeugführer-Arbeitsplatz für ein teleoperiertes Kraftfahrzeug, wobei das Kraftfahrzeug eine Frontkamera, eine Heckkamera, eine linke Seitenkamera, die optional auf eine hintere linke Seite des Kraftfahrzeugs gerichtet ist, und eine rechte Seitenkamera, die optional auf eine hintere rechte Seite des Kraftfahrzeugs gerichtet ist, aufweist, und wobei das Kraftfahrzeug ausgestaltet ist, um jeweils von der Frontkamera, der Heckkamera, und der linken und der rechten Seitenkamera aufgenommene Bilder an den teleoperierenden Fahrzeugführer-Arbeitsplatz zu senden, wobei der teleoperierenden Fahrzeugführer-Arbeitsplatz ausgestaltet ist, um eine Anzeige der von dem Kraftfahrzeug empfangenen Bilder in Abhängigkeit einer Ausrichtung eines Kopfes eines teleoperierenden Fahrzeugführers und/oder in Abhängigkeit einer Blickrichtung des teleoperierenden Fahrzeugführers zu verändern.

Wenn ein automatisiert betriebenes Fahrzeug Schwierigkeiten hat, Entscheidungen zu treffen oder nicht in der Lage ist, eine bestimmte Situation im Straßenverkehr zu bewältigen, kann ein Fahrzeugführer aus einem stationären Steuerstand herangezogen werden, um ferngesteuert die Fahrzeugführung zwischenzeitlich zu übernehmen. Es gibt dabei mehrere Gründe, warum der Einsatz eines entfernt steuernden Fahrzeugführers für grundsätzlich automatisiert betriebene Fahrzeuge sinnvoll sein kann: Liegt eine komplexe Situation vor, die den Algorithmus des automatisierten Fahrzeugs zur selbstständigen Fahrsteuerung überfordert, kann ein menschlicher Fahrzeugführer aus einem stationären Steuerstand durch manuelle Übernahme des Fahrzeuges und entsprechender Fernsteuerung das Fahrzeug sicher durch die Situation führen. In anderen Fällen kann das Fahrsteuerungssystem des Fahrzeugs möglicherweise selbst nicht in der Lage sein, eine optimale Entscheidung zu treffen. Auch hierbei kann der Fahrzeugführer aus dem stationären Steuerstand helfen, indem er entsprechende Entscheidungen trifft, die auf seiner menschlichen Erfahrung und Intuition basieren. Auch können damit Kosten eingespart werden, da ein automatisiertes Fahrzeug auch grundsätzlich autonom betrieben werden kann, wenn noch nicht jede Verkehrssituation von diesem garantiert autonom gehandhabt werden kann. Außerdem kann für manche Situationen die menschliche Erfahrung im Gegensatz zur maschinellen wertvoll sein, beispielsweise auf weitere menschliche Interaktion in der Umgebung des ferngesteuerten Fahrzeugs adäquat reagieren zu können. Liegen beispielsweise Handzeichen von umherstehenden Personen oder verbale Aufforderung von Passanten vor, kann unter Umständen das Fahrzeug diese nicht interpretieren, der Fahrzeugführer aus der Entfernung jedoch schon. Auch bei technischen Problemen kann ein menschlicher Fahrer noch in der Lage sein, das Fahrzeug sicher zu bewegen oder an einen sicheren Ort zu verschieben, während der Algorithmus des automatischen Fahrsteuerungssystems dies nicht mehr kann. In Zusammenschau kann der Einsatz von teleoperierenden Fahrzeugführern für automatisierte Fahrzeuge in bestimmten Situationen die Sicherheit erhöhen, die Effizienz steigern und die Kosten senken.

Nachteilig an der Übernahme eines Fahrzeugs in Teleoperation ist in geringem Maße die Latenz, das heißt die Zeitverzögerung, die bei der Übertragung der Steuerbefehle aus dem stationären Steuerstand zum Fahrzeug, sowie in hohem Maße die Latenz, die bei der Übertragung des Videostroms aus dem Fahrzeug aus Egoperspektive an den stationären Steuerstand jeweils zwangsläufig auftritt. Während die drahtlose Übertragung, d. h. der Lauf der Funksignale, mit Lichtgeschwindigkeit und damit quasi in Echtzeit erfolgt, tragen eine Kamera zur Aufnahme der Bildsequenzen für das Video, Module zur Übertragung der Daten (welche unter Umständen die Ausführung algorithmischer Rechenschritte erfordern), ein Bildschirm im stationären Steuerstand wesentlich zu dieser Latenz bei; im Falle der Steuerkommandos ist die Latenz im Wesentlichen durch Beiträge der Eingabeeinheiten am stationären Steuerstand, Module zur Verarbeitung und Übertragung sowie zum Empfang dieser Daten und den Aktoren im Fahrzeug zusammengesetzt.

Die Latenzen, insbesondere die, die bei der Übertragung des Videostroms vom Fahrzeug entsteht, vermindern das Situationsbewusstsein des Fahrzeugführers am stationären Steuerstand und können dazu führen, dass der Fahrzeugführer eine soweit verzögerte oder ungenaue Wahrnehmung der Umgebung um das Fahrzeug erhält, dass Fehlentscheidungen oder Fehlreaktionen resultieren. Umgekehrt führt die Latenz der Datenübertragung aus dem stationären Steuerstand zum Fahrzeug unter Umständen dazu, dass der Fahrzeugführer Schwierigkeiten hat, das Fahrzeug präzise und konvergent auf eine Soll-Trajektorie zu steuern, sodass mehrfache Überschwinger in der Steuerung zu Schwingungen insbesondere in der Seitenbewegung des Fahrzeugs führen können. Je größer die Latenzen in beiden Richtungen, umso höher die kognitive Belastung des Fahrzeugführers. Die benötigte höhere Aufmerksamkeit kann zu Stress und Ermüdung des Fahrzeugführers führen.

In gewissen Grenzen können diese Latenzen durch technische Maßnahmen verringert werden, beispielsweise durch Verwendung von drahtlosen Funknetzen mit höherer Bandbreite, geringeren Latenzen, durch Nutzung von dedizierten Kommunikationskanälen, usw.; auch kann auf eine vergrößerte Unterstützung durch Fahrerassistenzsysteme am Fahrzeug zurückgegriffen werden, um die kognitive Belastung zu verringern. Je nach Situation kann auch zwischen verschiedenen Teleoperationsmodi ausgewählt werden, um zum Beispiel zwischen direkter Kontrolle, überwachter Kontrolle oder geteilter Kontrolle über das Fahrzeug zu wechseln, um die Anforderungen an den Fahrzeugführer und das Fahrzeug situationsgerecht zu optimieren. Auch kann das Situationsbewusstsein des Fahrzeugführers verbessert werden, indem zusätzliche Informationen am stationären Steuerstand beispielsweise über den Zustand des Fahrzeugs und seiner Umgebung ausgegeben werden. Dieser Themenkomplex wird auch in der Veröffentlichung "B. Xia, F. Kong, J. Zhou, X. Tang and H. Gong, "A Delay-Tolerant Data Transmission Scheme for Internet of Vehicles Based on Software Defined Cloud-Fog Networks," in IEEE Access, vol. 8, pp. 65911-65922, 2020, doi: 10.1109/ACCESS.2020.2983440" entsprechend dargestellt.

Die US 2011/066262 A1 beschreibt ein Verfahren und System zum Fernsteuern einer Vorrichtung durch einen Steuerstand, wobei steuerstandseitig eine latenzfreie bildliche Darstellung eines Umfeldes bereitgestellt wird, die auf einer Videovorhersage beruht.

Es verbleibt jedoch auch bei diesen Lösungen immer noch eine Latenz, die zur Verminderung der Qualität der Fahrzeugführung aus einem stationären Steuerstand durch Fernsteuerung führt. Aufgabe der Erfindung ist es deshalb, eine Teleoperation eines automatisierten Fahrzeugs bezüglich der Probleme durch die auftretende Latenz in der Funkübertragung zwischen einem stationären Steuerstand und dem Fahrzeug zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Offenbarung betrifft ein System zur Durchführung einer teleoperierten Fahrzeugführung eines automatisierten Fahrzeugs, aufweisend zumindest ein automatisiertes Fahrzeug, einen stationären Steuerstand, und eine Simulationseinheit, wobei das automatisierte Fahrzeug eine Sensoreinheit ausgeführt zum Erfassen seiner Umgebung und zum Übermitteln von Informationen über die Umgebung an die Simulationseinheit aufweist, wobei der stationäre Steuerstand dazu ausgeführt ist, Steuerkommandos an die Simulationseinheit und an das automatisierte Fahrzeug zu übermitteln, und wobei die Simulationseinheit dazu ausgeführt ist, basierend auf den Daten der Sensoreinheit und basierend auf den Steuerkommandos des stationären Steuerstands kontinuierlich eine Vorwärts-Verkehrssimulation auszuführen, die ausgehend von aus den Informationen ermittelten jeweils aktuellen realen Positionen von Verkehrsteilnehmern in der Umgebung des Fahrzeugs eine wiederholt aktualisierte Vorhersage deren Positionen für einen jeweiligen Zeitpunkt liefert, der gegenüber einer Echtzeit jeweils um eine angenommene oder bekannte Latenz zwischen einer Erfassung von Informationen der Sensoreinheit bis zu einer auf diesen Informationen basierenden Ausgabe an einer Anzeigeeinheit des stationären Steuerstands in der Zukunft liegt, sowie die Vorhersage mittels der Informationen der Sensoreinheit laufend zu korrigieren, und ein Videosignal mit einer Darstellung der weiteren Verkehrsteilnehmer in deren vorhergesagten Positionen relativ zum eigenen teleoperierten Fahrzeug, sowie bevorzugt eine virtuelle Nachbildung der Umgebung, die auf der real erfassten basieren kann, zur Anzeige an der Anzeigeeinheit des stationären Steuerstands zu übermitteln.

Es wird somit die Grundidee verfolgt, dass der Fahrzeugführer im stationären Steuerstand eben nicht auf seiner Anzeigeeinheit des stationären Steuerstands das Latenz-behaftete Bild der Umgebung mit den darin sich befindlichen Verkehrsteilnehmern erfasst, sondern eine von einem Videosignal erzeugte Anzeige, welche von der Simulationseinheit berechnet wurde. Die Simulationseinheit ermittelt hierfür die wahrscheinlichste Veränderung des Verkehrsszenarios mit den entsprechenden neuen Positionen der Verkehrsteilnehmer, somit wird dem Fahrzeugführer eine Projektion einer gegenwärtigen Situation in die Zukunft angezeigt.

Vorteilhaft berechnet die Simulationseinheit genau so weit in die Zukunft voraus, um eine gesamte Latenz zwischen der Umgebungserfassung an der Sensoreinheit des Fahrzeugs bis zur Anzeige des Videosignals an der Anzeigeeinheit des stationären Steuerstands zu kompensieren. Erfolgt die Kompensation der Latenz präzise, sieht daher der Fahrzeugführer im stationären Steuerstand die Positionen der weiteren Verkehrsteilnehmer relativ zum eigenen teleoperierten Fahrzeug wieder in Echtzeit, jedoch mit einem geringfügigen gegen Fehler versehen, der aus einer Abweichung zwischen der Simulation und der Realität resultiert.

Da die zu erwartenden Latenzen jedoch im Bereich von wenigen Sekunden bis zu allermeist unter einer Sekunde reichen, ist entsprechend die Vorwärts-Verkehrssimulation der Simulationseinheit nur entsprechend kurz in die Zukunft auszuführen. Für solche Simulationszeiten, die noch dazu durch Initialisierung mit realen Informationen erfolgt, können hochgradig genaue und zuverlässige Ergebnisse erwartet werden.

Zu jedem Zeitschritt einer hochfrequenten wiederholten Ausführung der Vorwärts-Verkehrssimulation wird vorteilhaft diese durch reale Daten initialisiert. Die realen Daten werden aus den Informationen der Sensoreinheit des Fahrzeugs extrahiert, aus denen aktuelle Positionen sowie weiterhin vorteilhaft kinematische Daten der weiteren Verkehrsteilnehmer hervorgehen. Somit kann zu jedem Zeitschritt eine neue Initialisierung erfolgen, außerdem können Korrekturen der wiederholten Vorwärts-Verkehrssimulation-Vorgänge mit den realen Daten durchgeführt werden.

Ist beispielsweise eine aktuelle Position eines weiteren Verkehrsteilnehmers und dessen Bewegungsrichtung und Geschwindigkeit bekannt, so kann für die beispielhafte Vorwärts-Verkehrssimulation für eine Sekunde hoch genau vorausgesagt werden, wo sich dieser eine Sekunde später befinden wird, da Verkehrsteilnehmer erwartbaren hohen Trägheiten unterliegen und die Änderung der Geschwindigkeit (Beschleunigung) in ihren Grenzen abgeschätzt werden kann.

Da die Vorwärts-Verkehrssimulation von einem jeweiligen realen Ausgangspunkt nach einer Initialisierung ausgeht und eine entsprechende Kinematik zu einer zukünftigen Position fortgeführt werden kann, kann von Vorwärts-Rechnung oder Vorwärts-Integration gesprochen werden.

Ein solches Vorgehen zur wiederholten Initialisierung und Korrektur der nur für kurze Zeit ausgeführten Vorwärts-Verkehrssimulation ist in der Numerik als Mehrschrittverfahren oder "Multistep Method" bekannt. Dabei wird die Lösung einer zeitabhängigen Differentialgleichung an einem neuen Zeitpunkt aus der Lösung an vorherigen Zeitpunkten und der Ableitung der Lösung an einem oder mehreren Zeitpunkten berechnet. Es gibt verschiedene Arten von Mehrschrittverfahren, wie z.B. explizite und implizite Verfahren, Adams-Bashforth-Verfahren, Adams-Moulton-Verfahren, BDF-Verfahren und Leapfrog-Verfahren. Weitere Details können auch der Publikation "Introduction to Numerical Methods for Time Dependent Differential Equations. Heinz-Otto Kreiss, Omar Eduardo Ortiz. April 2014. ISBN: 978-1-118-83891-4" entnommen werden.

Um dies realisieren zu können, ist die Sensoreinheit des Fahrzeugs so ausgestattet, dass entsprechende Daten über die Verkehrsteilnehmer in der Umgebung des Fahrzeugs ermittelt werden können, insbesondere die jeweils aktuellen Positionen relativ zum eigenen Fahrzeug. Es bietet sich daher an, Sensoren mit räumlicher Erfassungsmöglichkeit und besonders vorteilhaft einen Verbund aus einzelnen Sensoren wie eine Sensorfusion aus beispielsweise LiDAR und/oder RADAR und/oder einer 3-D-Kamera zu verwenden.

Außerdem ist die Simulationseinheit mit einer entsprechend leistungsfähigen Recheneinheit auszustatten, die hochrealistische echtzeitfähige Modelle zur Bahnabschätzung anderer Verkehrsteilnehmer ausführen kann. Insbesondere werden hierbei Fahrmanöver ermittelt, die die weiteren Verkehrsteilnehmer am wahrscheinlichsten ausführen. Diese Modellausführung und eine Trajektorien-Prädiktion sind im Stand der Technik bekannt und insbesondere der DE 10 2021 213 538 A1 und der DE 10 2021 213 304 A1 zu entnehmen. Bestehenden Datenbanken können beispielsweise bereits erstellte Modelle, die beispielsweise als künstliche neuronale Netze ausgeführt sind und bereits trainiert wurden, entnommen werden, auf die die Simulationseinheit Zugriff hat.

Zudem werden vorteilhaft die Steuerkommandos des stationären Steuerstands der Simulationseinheit zugeführt, um die eigene Bewegung des teleoperierten Fahrzeugs ebenfalls in die Zukunft fortschreiben zu können. Im Gegensatz zu den weiteren Verkehrsteilnehmern besteht daher eine erhöhte Vorhersagegenauigkeit, da Bremsvorgänge und Beschleunigungsvorgänge zusammen mit bekannten physikalischen Größen des teleoperierten Fahrzeugs vorausschauend aufgrund der Stellgrößen an Bremse und Gas berücksichtigt werden können, anstatt auf kinematische Beobachtung der Wirkung dieser angewiesen zu sein - es sei denn, die weiteren Verkehrsteilnehmer verfügen über eine V2X Schnittstelle und senden und entsprechende Daten direkt an die Simulationseinheit oder an das teleoperierte Fahrzeug, welches diese Daten wiederum an die Simulationseinheit weiterleiten kann.

Eine mittels der Vorwärts-Verkehrssimulation ermittelte Vorhersage des zukünftigen Verkehrsgeschehens für den Zeitraum einer erwarteten oder bekannten Latenz wird dem Fahrzeugführer am stationären Steuerstand an einer Anzeigeeinheit angezeigt. Die Anzeigeeinheit kann einen oder mehrere Bildschirme umfassen, einen oder mehrere Projektoren, auch eine Brille der virtuellen Realität kann dort verwendet werden. In diesem Fall erhält der Fahrzeugführer nicht länger einen unbearbeiteten Videostrom aus der Egoperspektive aus dem Fahrzeug, sondern synthetische Bilder, die bevorzugt auf Grundlage der real erfassten Umgebung synthetisiert werden.

Die Visualisierung muss für den Fahrzeugführer im stationären Steuerstand nicht notwendigerweise fotorealistisch dargestellt werden, wenn dadurch die Zeit, die zum Rendern benötigt wird, reduziert werden kann. Wichtig sind jedoch die realitätsgetreuen Größenverhältnisse, Perspektiven und Abstände. Eine synthetische, schemenhafte oder niedrig-auflösende Darstellung erfordert dann jedoch zusätzliches Training für den Fahrzeugführer. Zusätzlich oder ausschließlich kann die Szenerie auch aus der Vogelperspektive dargestellt werden.

Gemäß einer vorteilhaften Ausführungsform ist das Fahrzeug dazu ausgeführt, seine aktuelle Position an die Simulationseinheit zu übermitteln, wobei die Simulationseinheit dazu ausgeführt ist, die Vorwärts-Verkehrssimulation mithilfe einer digitalen Karte, in der die aktuelle Position des Fahrzeugs eingeordnet wird, auszuführen.

Gemäß einer weiteren vorteilhaften Ausführungsform ist die Simulationseinheit dazu ausgeführt, mittels der aktuellen Informationen der Sensoreinheit des Fahrzeugs die in der digitalen Karte abgespeicherten Informationen zu ergänzen.

Gemäß einer weiteren vorteilhaften Ausführungsform ist die Simulationseinheit dazu ausgeführt, eine real auftretende Latenz jeweils aktuell zu ermitteln und den Zeitpunkt in der Zukunft, bis zu der die Vorwärts-Verkehrssimulation ausgeführt wird, laufend daran anzupassen.

Gemäß einer weiteren vorteilhaften Ausführungsform ist die Simulationseinheit dazu ausgeführt, mittels jeweils aktueller Informationen der Sensoreinheit kinematische Daten von Verkehrsteilnehmern in der Umgebung des Fahrzeugs zu ermitteln und für die Vorwärts-Verkehrssimulation zu verwenden.

Gemäß einer weiteren vorteilhaften Ausführungsform ist die Simulationseinheit dazu ausgeführt, in das Videosignal die mittels der Sensoreinheit ermittelte jeweils aktuelle Position eines jeweiligen Verkehrsteilnehmers in der Umgebung des Fahrzeugs zusätzlich zur vorhergesagten Position zu integrieren.

Die Positionen der Verkehrsteilnehmer ohne Simulation, also die Bilder, die mit der Latenz an die Simulationseinheit übergeben werden, können beispielsweise als Schatten zusätzlich an der Anzeigeeinheit eingeblendet werden, insbesondere wenn der Fahrzeugführer dies für sinnvoll erachtet.

Laut der Erfindung ist die Simulationseinheit dazu ausgeführt, im Videosignal die Verkehrsteilnehmer mit im Vergleich zur Realität vergrößerten Volumina darzustellen und hochfrequente Sprünge in ihrer vorhergesagten Position innerhalb des vergrößerten Volumens zu behalten.

Durch die stetigen Messungen und Messungenauigkeiten kann es sein, dass die Verkehrsteilnehmer ggf. um mehrere Zentimeter in der Simulation hin und her springen. Dies wird jedoch durch das Mehrschrittverfahren weitestgehend ausgeschlossen. Für den Fall, dass dies dennoch auftritt, können die angezeigten Modelle der Verkehrsteilnehmer um wenige Zentimeter gegenüber der Realitätstreue vergrößert werden, um einen Sicherheitsfaktor einzubauen. D.h. das größere Modell kann stabilisiert bleiben, wenn sich die berechnete Position in dessen Rahmen bewegt.

Gemäß einer weiteren vorteilhaften Ausführungsform umfassen die Informationen der Sensoreinheit des Fahrzeugs von anderen Verkehrsteilnehmern per Funkübertragung an das Fahrzeug übermittelte Daten.

Gemäß einer weiteren vorteilhaften Ausführungsform umfassen die Daten der anderen Verkehrsteilnehmer einen jeweiligen Zeitstempel mit Bezug auf die Sendezeit der Daten, wobei die Simulationseinheit dazu ausgeführt ist, eine aktuelle Latenz mithilfe des jeweiligen Zeitstempels zu ermitteln.

Gemäß einer weiteren vorteilhaften Ausführungsform sind in der Simulationseinheit geometrische Daten und/oder Dynamik-Daten über das eigene teleoperierte automatisierte Fahrzeug abgelegt, für dessen Umgebung die Vorwärts-Verkehrssimulation durchgeführt wird, wobei die Simulationseinheit dazu ausgeführt ist, mithilfe der geometrischen Daten und/oder Dynamik-Daten die Vorwärts-Verkehrssimulation auszuführen.

Gemäß einer weiteren vorteilhaften Ausführungsform ist die Simulationseinheit dazu ausgeführt, eine Abweichung zwischen den vorhergesagten Positionen und den sich anschließend real einstellenden Positionen der weiteren Verkehrsteilnehmer in der Umgebung des Fahrzeugs zu ermitteln, und bei Überschreiten der Abweichung über einen vorgegebenen Grenzwert die von der Simulationseinheit erzeugten Videosignale für die Anzeigeeinheit des stationären Steuerstands durch aktuelle Kameradaten des Fahrzeugs zu ersetzen.

Die Latenz und die Abweichung vom Ergebnis der Vorwärts-Verkehrssimulation zu der jeweils echten Position eines Verkehrsteilnehmers (nach Übertragung also mit Latenz) werden bevorzugt laufend überwacht. Wird ein Grenzwert überschritten - wird beispielhaft entweder wird die Latenz zu groß und/oder die Abweichungen der Vorwärts-Verkehrssimulation zur Realität ist zu hoch - wird bevorzugt an der Anzeigeeinheit auf einen Videostrom direkt aus dem Fahrzeug umgeschaltet und der Fahrzeugführer muss mit entsprechender Latenz steuern. In welchem Modus der Fahrzeugführer sich gerade befindet, wird bevorzugt auf der Anzeigeeinheit angezeigt.

Gemäß einer weiteren vorteilhaften Ausführungsform ist die Simulationseinheit dazu ausgeführt, eine Abweichung zwischen den vorhergesagten Positionen und den sich anschließend real einstellenden Positionen der weiteren Verkehrsteilnehmer in der Umgebung des Fahrzeugs zu ermitteln, und bei Überschreiten eines Schwellwerts den Zeitraum zwischen Echtzeit und dem jeweiligen Zeitpunkt in der Zukunft, bis zu dem die Vorwärts-Verkehrssimulation ausgeführt wird, zu halten und damit nicht weiter zu vergrößern.

Alternativ zur vorhergehenden Ausführungsform wird hierbei kein Grenzwert definiert, sondern ein Schwellwert, auf den die Laufzeit der Vorwärts-Verkehrssimulation begrenzt wird. Bevorzugt wird die jeweils aktuelle verbleibende Latenz an der Anzeigeeinheit angezeigt. Bei Bedarf kann vorteilhaft der Zeitraum der Vorwärts-Verkehrssimulation auch langsam auf Null reduziert werden und dann erst auf einen Videostrom aus dem Fahrzeug umgeschaltet werden, um einen weichen Übergang zu ermöglichen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigt:

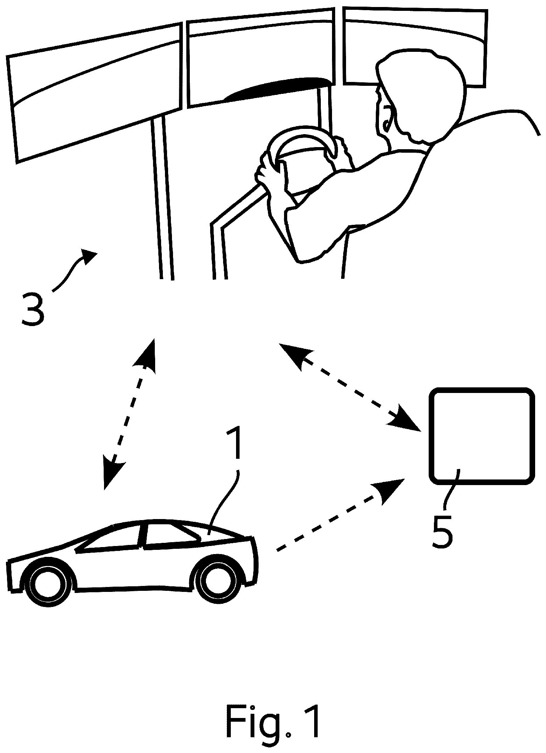

- Fig. 1:: Ein System zur Durchführung einer teleoperierten Fahrzeugführung eines automatisierten Fahrzeugs gemäß einem Ausführungsbeispiel der Erfindung.

Fig. 1 zeigt eine Systemarchitektur mit einem ferngesteuerten Fahrzeug 1 und einem zugehörigen stationären Steuerstand 3 mit einem menschlichen Fahrzeugführer. Während in diesem System die konventionelle Teleoperation weiterhin grundsätzlich eingerichtet ist, um bei Bedarf angewendet zu werden, ist zudem das System gegenüber dem Stand der Technik mit einer Simulationseinheit 5 erweitert. Die konventionelle Fahrzeugführung besteht darin, dass das Fahrzeug 1 mit seiner Sensoreinheit die Umgebung erfasst und dabei auch einen Videostrom aus einer Egoperspektive aus dem Fahrzeug 1 an einen oder mehrere Bildschirme des stationären Steuerstands 3 liefert. Im Gegenzug dazu übermittelt der stationäre Steuerstand 3 die Eingabebefehle des Fahrzeugführers an das Fahrzeug 1, an dem diese mithilfe von Aktoren in reale Stellgrößen umgesetzt werden. Um jedoch der Latenz bei der Übertragung der Videobilder vom Fahrzeug 1 an die Anzeigeeinheit des stationären Steuerstands 3 entgegenzuwirken, ist eine Simulationseinheit 5 vorgesehen. Die Sensoreinheit des Fahrzeugs 1 übermittelt daher ihre Informationen bei Betrieb des Simulationseinheit 5 insbesondere an diese, sodass die Simulationseinheit 5 aus den Daten der Sensoreinheit des Fahrzeugs 1 eine Vorhersage für die Zukunft über die Bewegungen der weiteren Verkehrsteilnehmer im Umfeld des Fahrzeugs 1 erzeugen kann, die genau so weit reicht, um die Latenz zwischen den Informationen aus der Sensoreinheit des Fahrzeugs 1 auf dem Weg zum stationären Steuerstand 3 mit dem Umweg über die Simulationseinheit 5 zu kompensieren. Aus Sensorik-Daten und/oder Objektlisten werden dynamische Elemente in der Umgebung, wie Fahrzeuge, Fußgänger oder andere bewegliche Objekte erkannt bzw. ausgelesen und die genaue Position mit Geschwindigkeit und Fahrtrichtung und Beschleunigung in Echtzeit getrackt. Den Verkehrsteilnehmern werden passende Parameter der Social-Force-Modelle zugewiesen. Genutzt werden können auch V2X-Daten, um z.B. verdeckte Verkehrsteilnehmer zu erkennen. Die V2X-Daten können vom zu teleoperierenden Fahrzeug 1 selbst kommen oder die Simulationseinheit 5 ruft diese Daten ab. Dies kann von entsprechender Infrastruktur oder anderen mit Sensorik ausgestatteten Fahrzeugen sein. Bei der Übermittlung ist wichtig, dass stets ein genauer Zeitstempel mit den Daten übertragen wird. Die auf der Simulationseinheit 5 durchgeführte Vorwärts-Verkehrssimulation nutzt neben Modellen der einzelnen Verkehrsteilnehmer kinematische Vorwärtsintegration sowie Dynamikdaten des eigenen Fahrzeugs 1 und dessen Steuerkommandos, wie sie am stationären Steuerstand 3 vorgegeben werden. Jede Steuerung, die vom Fahrzeugführer im stationären Steuerstand 3 an das Fahrzeug 1 übertragen wird, wird daher auch an die Simulationseinheit 5 übermittelt.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- 1: Fahrzeug
- 3: stationärer Steuerstand
- 5: Simulationseinheit

## Patentansprüche

1. System zur Durchführung einer teleoperierten Fahrzeugführung eines automatisierten Fahrzeugs (1), aufweisend zumindest ein automatisiertes Fahrzeug (1), einen stationären Steuerstand (3), und eine Simulationseinheit (5), wobei das automatisierte Fahrzeug (1) eine Sensoreinheit ausgeführt zum Erfassen seiner Umgebung und zum Übermitteln von Informationen über die Umgebung an die Simulationseinheit (5) aufweist, wobei der stationäre Steuerstand (3) dazu ausgeführt ist, Steuerkommandos an die Simulationseinheit (5) und an das automatisierte Fahrzeug (1) zu übermitteln, und wobei die Simulationseinheit (5) dazu ausgeführt ist, basierend auf den Daten der Sensoreinheit und basierend auf den Steuerkommandos des stationären Steuerstands (3) kontinuierlich eine Vorwärts-Verkehrssimulation auszuführen, die ausgehend von aus den Informationen ermittelten jeweils aktuellen realen Positionen von Verkehrsteilnehmern in der Umgebung des Fahrzeugs (1) eine wiederholt aktualisierte Vorhersage deren Positionen für einen jeweiligen Zeitpunkt liefert, der gegenüber einer Echtzeit jeweils um eine angenommene oder bekannte Latenz zwischen einer Erfassung von Informationen der Sensoreinheit bis zu einer auf diesen Informationen basierenden Ausgabe an einer Anzeigeeinheit des stationären Steuerstands (3) in der Zukunft liegt, sowie die Vorhersage mittels der Informationen der Sensoreinheit laufend zu korrigieren, und ein Videosignal mit einer Darstellung der weiteren Verkehrsteilnehmer in deren vorhergesagten Positionen relativ zum eigenen teleoperierten Fahrzeug (1) zur Anzeige an der Anzeigeeinheit des stationären Steuerstands (3) zu übermitteln **dadurch gekennzeichnet, dass** die Simulationseinheit (5) dazu ausgeführt ist, im Videosignal die Verkehrsteilnehmer mit im Vergleich zur Realität vergrößerten Volumina darzustellen und hochfrequente Sprünge in ihrer vorhergesagten Position innerhalb des vergrößerten Volumens zu behalten.

2. System nach Anspruch 1,
wobei die Simulationseinheit (5) dazu ausgeführt ist, eine real auftretende Latenz jeweils aktuell zu ermitteln und den Zeitpunkt in der Zukunft, bis zu der die Vorwärts-Verkehrssimulation ausgeführt wird, laufend daran anzupassen.

3. System nach einem der vorhergehenden Ansprüche,
wobei die Simulationseinheit (5) dazu ausgeführt ist, mittels jeweils aktueller Informationen der Sensoreinheit kinematische Daten von Verkehrsteilnehmern in der Umgebung des Fahrzeugs (1) zu ermitteln und für die Vorwärts-Verkehrssimulation zu verwenden.

4. System nach einem der vorhergehenden Ansprüche,
wobei die Simulationseinheit (5) dazu ausgeführt ist, in das Videosignal die mittels der Sensoreinheit ermittelte jeweils aktuelle Position eines jeweiligen Verkehrsteilnehmers in der Umgebung des Fahrzeugs (1) zusätzlich zur vorhergesagten Position zu integrieren.

5. System nach einem der vorhergehenden Ansprüche,
wobei die Informationen der Sensoreinheit des Fahrzeugs (1) von anderen Verkehrsteilnehmern per Funkübertragung an das Fahrzeug (1) übermittelte Daten umfassen.

6. System nach Anspruch 5,
wobei die Daten der anderen Verkehrsteilnehmer einen jeweiligen Zeitstempel mit Bezug auf die Sendezeit der Daten umfassen, wobei die Simulationseinheit (5) dazu ausgeführt ist, eine aktuelle Latenz mithilfe des jeweiligen Zeitstempels zu ermitteln.

7. System nach einem der vorhergehenden Ansprüche,
wobei in der Simulationseinheit (5) geometrische Daten und/oder Dynamik-Daten über das eigene teleoperierte automatisierte Fahrzeug (1) abgelegt sind, für dessen Umgebung die Vorwärts-Verkehrssimulation durchgeführt wird, wobei die Simulationseinheit (5) dazu ausgeführt ist, mithilfe der geometrischen Daten und/oder Dynamik-Daten die Vorwärts-Verkehrssimulation auszuführen.

8. System nach einem der Ansprüche 1 bis 7,
wobei die Simulationseinheit (5) dazu ausgeführt ist, eine Abweichung zwischen den vorhergesagten Positionen und den sich anschließend real einstellenden Positionen der weiteren Verkehrsteilnehmer in der Umgebung des Fahrzeugs (1) zu ermitteln, und bei Überschreiten der Abweichung über einen vorgegebenen Grenzwert das von der Simulationseinheit (5) erzeugte Videosignal für die Anzeigeeinheit der stationären Steuerstands (3) durch aktuelle Kameradaten des Fahrzeugs (1) zu ersetzen.

9. System nach einem der Ansprüche 1 bis 7,
wobei die Simulationseinheit (5) dazu ausgeführt ist, eine Abweichung zwischen den vorhergesagten Positionen und den sich anschließend real einstellenden Positionen der weiteren Verkehrsteilnehmer in der Umgebung des Fahrzeugs (1) zu ermitteln, und bei Überschreiten eines Schwellwerts den Zeitraum zwischen Echtzeit und dem jeweiligen Zeitpunkt in der Zukunft, bis zu dem die Vorwärts-Verkehrssimulation ausgeführt wird, zu halten und damit nicht weiter zu vergrößern

## Claims

1. System for carrying out teleoperated vehicle guidance of an automated vehicle (1), comprising at least one automated vehicle (1), a stationary control station (3), and a simulation unit (5), wherein the automated vehicle (1) has a sensor unit designed to detect its surroundings and to transmit information about the surroundings to the simulation unit (5), wherein the stationary control station (3) is designed to transmit control commands to the simulation unit (5) and to the automated vehicle (1), and wherein the simulation unit (5) is designed to continuously carry out a forward traffic simulation based on the data of the sensor unit and based on the control commands of the stationary control station (3), which forward traffic simulation, based on the information determined in each case current real positions of traffic participants in the surroundings of the vehicle (1), repeats An updated prediction of the positions thereof for a respective time which, in relation to a real time, is in each case about an assumed or known latency between a detection of information of the sensor unit up to an output based on this information at a display unit of the stationary control stand (3) in the future, and the prediction by means of the information of the sensor unit continuously to correct, and to transmit a video signal with a representation of the further road users in their predicted positions relative to their own teleoperated vehicle (1) for display on the display unit of the stationary control stand (3), **characterised in that** the simulation unit (5) is designed to represent in the video signal the road users with increased volumes in comparison with reality and to retain high-frequency jumps in their predicted position within the increased volume.

2. System according to claim 1,
wherein the simulation unit (5) is designed to determine a latency which occurs in real terms in each case currently and to continuously adapt the time in the future up to which the forward traffic simulation is carried out to this.

3. System according to any preceding claim,
wherein the simulation unit (5) is designed to determine kinematic data of road users in the vicinity of the vehicle (1) by means of current information of the sensor unit in each case and to use said data for the forward traffic simulation.

4. System according to any preceding claim,
wherein the simulation unit (5) is designed to integrate into the video signal the respective current position of a respective road user in the vicinity of the vehicle (1), determined by means of the sensor unit, in addition to the predicted position.

5. System according to any preceding claim,
the simulation unit (5) of the sensor unit of the vehicle (1) comprises data transmitted by other road users to the vehicle (1) by radio transmission.

6. System according to claim 5,
wherein the data of the other road users comprise a respective time stamp with respect to the transmission time of the data, wherein the simulation unit (5) is designed to determine a current latency with the aid of the respective time stamp.

7. System according to any preceding claim,
geometric data and/or dynamic data relating to the teleoperated automated vehicle (1) for the environment of which the forward traffic simulation is carried out are stored in the simulation unit (5), the simulation unit (5) being designed to carry out the forward traffic simulation with the aid of the geometric data and/or dynamic data.

8. System according to any one of claims 1 to 7,
the simulation unit (5) is designed to determine a deviation between the predicted positions and the subsequently real positions of the further road users in the vicinity of the vehicle (1), and, if the deviation exceeds a predetermined limit value, to replace the video signal generated by the simulation unit (5) for the display unit of the stationary control stand (3) with current camera data of the vehicle (1).

9. System according to any one of claims 1 to 7,
the simulation unit (5) is designed to determine a deviation between the predicted positions and the subsequently real positions of the further road users in the vicinity of the vehicle (1), and, if a threshold value is exceeded, to keep the period between real time and the respective time in the future up to which the forward traffic simulation is carried out, and thus not to increase it further.

## Revendications

1. Système de conduite téléguidée d'un véhicule automatisé (1), comprenant au moins un véhicule automatisé (1), un poste de commande fixe (3) et une unité de simulation (5), le véhicule automatisé (1) comprenant une unité de capteur conçue pour détecter son environnement et pour transmettre des informations sur l'environnement à l'unité de simulation (5), le poste de commande fixe (3) étant conçu pour transmettre des commandes de commande à l'unité de simulation (5) et au véhicule automatisé (1), et l'unité de simulation (5) étant conçue pour être basée sur les données de l'unité de capteur et sur les L'invention concerne un système permettant d'exécuter en continu une simulation de trafic en avant, qui, à partir de positions réelles réelles respectives d'usagers de la route dans l'environnement du véhicule (1) déterminées à partir des informations, fournit une prédiction actualisée de manière répétée de leurs positions pour un instant respectif, lequel se situe par rapport à un temps réel respectivement d'une latence supposée ou connue entre une saisie d'informations de l'unité de détection et une sortie basée sur ces informations à une unité d'affichage de l'unité de commande (3) dans le futur, ainsi qu'une correction continue de la prédiction au moyen des informations de l'unité de détection, et un signal vidéo présentant une représentation des autres usagers de la circulation Transmettre des positions prédites par rapport à son propre véhicule téléguidé (1) pour affichage sur l'unité d'affichage du poste de commande fixe (3), **caractérisé en ce que** l'unité de simulation (5) est conçue pour représenter dans le signal vidéo les usagers de la route avec des volumes augmentés par rapport à la réalité et pour maintenir des sauts à haute fréquence dans leur position prédite à l'intérieur du volume augmenté.

2. Système selon la revendication 1,
l'unité de simulation (5) est conçue pour déterminer une latence réelle à chaque fois en temps réel et pour adapter en continu l'instant dans le futur jusqu'auquel la simulation du trafic en marche avant est exécutée.

3. Système selon l'une quelconque des revendications précédentes,
l'unité de simulation (5) est conçue pour déterminer des données cinématiques d'usagers de la route dans l'environnement du véhicule (1) à l'aide d'informations actualisées respectives de l'unité de détection et pour les utiliser pour la simulation de la circulation en marche avant.

4. Système selon l'une quelconque des revendications précédentes,
l'unité de simulation (5) est conçue pour intégrer dans le signal vidéo la position actuelle d'un usager de la route respectif dans l'environnement du véhicule (1), déterminée au moyen de l'unité de détection, en plus de la position prédite.

5. Système selon l'une quelconque des revendications précédentes,
l'unité de simulation (5) de l'unité de détection du véhicule (1) comprend des données transmises au véhicule (1) par d'autres usagers de la route par transmission radio.

6. Système selon la revendication 5,
dans laquelle les données des autres usagers de la route comprennent un horodatage respectif par rapport au temps d'émission des données, l'unité de simulation (5) étant conçue pour déterminer une latence actuelle à l'aide de l'horodatage respectif.

7. Système selon l'une quelconque des revendications précédentes,
dans l'unité de simulation (5) sont stockées des données géométriques et/ou des données dynamiques concernant le véhicule automatisé téléopéré (1) propre, pour l'environnement duquel est effectuée la simulation du trafic en marche avant, l'unité de simulation (5) étant conçue pour effectuer la simulation du trafic en marche avant à l'aide des données géométriques et/ou des données dynamiques.

8. Système selon l'une quelconque des revendications 1 à 7,
l'unité de simulation (5) est conçue pour déterminer une déviation entre les positions prédites et les positions ensuite réellement réglées des autres usagers de la route dans l'environnement du véhicule (1) et, en cas de dépassement de la déviation au-delà d'une valeur limite prédéterminée, pour remplacer le signal vidéo produit par l'unité de simulation (5) pour l'unité d'affichage du poste de commande fixe (3) par des données de caméra actuelles du véhicule (1).

9. Système selon l'une quelconque des revendications 1 à 7,
l'unité de simulation (5) est conçue pour déterminer un écart entre les positions prédites et les positions qui se définissent ensuite en termes réels des autres usagers de la route dans l'environnement du véhicule (1) et, en cas de dépassement d'une valeur seuil, pour maintenir et ainsi ne pas augmenter davantage le temps entre le temps réel et l'instant respectif dans le futur jusqu'auquel la simulation de la circulation en avant est exécutée.
